(19) Europäisches Patentamt / European Patent Office / Office européen des brevets

(11) **EP 3 059 896 B1**

(12) **FASCICULE DE BREVET EUROPEEN**

(45) Date de publication et mention de la délivrance du brevet:
**12.12.2018 Bulletin 2018/50**

(51) Int Cl.:
**H04L 9/08** *(2006.01)*     **H04L 9/14** *(2006.01)*
**H04L 29/06** *(2006.01)*     **H04N 21/2347** *(2011.01)*
**H04N 21/254** *(2011.01)*     **H04N 21/426** *(2011.01)*
**H04N 21/4627** *(2011.01)*     **H04N 21/6334** *(2011.01)*

(21) Numéro de dépôt: **15155391.4**

(22) Date de dépôt: **17.02.2015**

(54) **Méthode d'appariement entre une unité multimédia et au moins un opérateur, unité multimédia, opérateur et entité de personnalisation pour la mise en œuvre cette méthode**

Abgleichmethode zwischen einer Multimediaeinheit und mindestens einem Bediener, Multimediaeinheit, Bediener und Personalisierungseinheit für die Umsetzung dieser Methode

Method for matching a multimedia unit and at least one operator, multimedia unit, operator and personalisation entity for implementing said method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**24.08.2016 Bulletin 2016/34**

(73) Titulaire: **Nagravision S.A.**
**1033 Cheseaux-sur-Lausanne (CH)**

(72) Inventeurs:
 • **FISCHER, Nicolas**
  **1290 Versoix (CH)**
 • **WYSEUR, Brecht**
  **1305 Penthalaz (CH)**
 • **FISCHER, Jean-Bernard**
  **25370 Rochejean (FR)**
 • **MACCHETTI, Marco**
  **22070 Casnate con Bernate (IT)**

(74) Mandataire: **Hoyng Rokh Monegier LLP**
**Rembrandt Tower, 31st Floor**
**Amstelplein 1**
**1096 HA Amsterdam (NL)**

(56) Documents cités:
**EP-A1- 0 482 233**

• PARK J-H ET AL: "KEY DISTRIBUTION FOR SECURE VSAT SATELLITE COMMUNICATIONS", IEEE TRANSACTIONS ON BROADCASTING, IEEE SERVICE CENTER, PISCATAWAY, NJ, US, vol. 44, no. 3, 1 septembre 1998 (1998-09-01), pages 274-277, XP000834835, ISSN: 0018-9316, DOI: 10.1109/11.715312
• "Chapter 12: Key Establishment Protocols ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 489 - 541 , 1 octobre 1996 (1996-10-01), XP001525012, ISBN: 978-0-8493-8523-0 Extrait de l'Internet: URL:http://www.cacr.math.uwaterloo.ca/hac/
• YA-LING ZHANG ET AL: "An ID-based Broadcast Encryption Scheme for Collaborative Design", NETWORKS SECURITY, WIRELESS COMMUNICATIONS AND TRUSTED COMPUTING, 2009. NSWCTC '09. INTERNATIONAL CONFERENCE ON, IEEE, PISCATAWAY, NJ, USA, 25 avril 2009 (2009-04-25), pages 699-702, XP031452770, ISBN: 978-1-4244-4223-2
• HUR JUNBEOM ET AL: "Privacy-preserving identity-based broadcast encryption", INFORMATION FUSION, vol. 13, no. 4, 1 janvier 2012 (2012-01-01), pages 296-303, XP028925787, ISSN: 1566-2535, DOI: 10.1016/J.INFFUS.2011.03.003

**Description**

**DOMAINE TECHNIQUE**

La présente invention concerne notamment une méthode d'appariement entre au moins un opérateur et une unité multimédia, cet appariement étant destiné à protéger des données diffusées par l'opérateur à l'unité multimédia. Elle concerne également un opérateur et une unité multimédia permettant la mise en oeuvre de la méthode ainsi qu'un système formé par au moins un tel opérateur et au moins une telle unité multimédia. Elle concerne en outre une entité de personnalisation participant à la mise en oeuvre de cette méthode.

Cette invention s'applique en premier lieu dans le contexte d'un système de diffusion de type "broadcast" c'est-à-dire dans un mode de diffusion dans lequel du contenu est transmis à une ou plusieurs unités multimédia par le biais d'un canal de communication à sens unique. Ce type de communication correspond à celui couramment utilisé dans un système de télévision à péage classique où les données sont transmises par satellite, par ondes hertziennes ou par réseaux câblés sans voie de retour, et où les unités multimédia reçoivent les informations sans possibilité d'interagir avec l'émetteur ou l'opérateur.

L'invention peut également s'appliquer dans un système de diffusion de type multicast, voire même un système de diffusion point à point (unicast).

Selon différents modes de réalisation de l'invention, il est possible que les unités multimédia n'aient pas la possibilité de transmettre des données ou des informations à l'opérateur, ou au contraire, que les unités multimédia puissent transmettre certaines données à l'opérateur, en particulier par l'intermédiaire d'une voie de retour.

De façon plus détaillée, un aspect de l'invention concerne une méthode d'appariement entre une unité multimédia et au moins un opérateur, l'unité multimédia étant destinée à recevoir des données à accès conditionnel dudit opérateur, l'unité multimédia disposant d'un identifiant d'unité multimédia, l'opérateur disposant d'un identifiant d'opérateur.

Un autre aspect de l'invention concerne une unité multimédia destinée à être appariée à au moins un opérateur, cette unité multimédia disposant d'un identifiant d'unité multimédia.

Un autre aspect de l'invention concerne un opérateur destiné à être apparié à au moins une unité multimédia, cet opérateur disposant d'un identifiant d'opérateur.

L'invention concerne également un système d'accès à des données à accès conditionnel.

Cette invention concerne en outre une entité de personnalisation en charge d'apparier au moins un opérateur et au moins une unité multimédia.

**TECHNIQUE ANTERIEURE**

Comme cela est bien connu, il existe actuellement de nombreux opérateurs qui sont en charge de distribuer du contenu à accès conditionnel ou du contenu protégé mis à disposition d'utilisateurs par l'intermédiaire d'unités multimédia. Chaque utilisateur peut avoir plusieurs récepteurs ou unités multimédia tels que des smartphones, des tablettes, des ordinateurs portables ou des récepteurs TV par exemple. L'explosion du nombre de dispositifs récepteurs ou unités multimédia pose un certain nombre de problèmes aux opérateurs.

Actuellement, dans un environnement de diffusion de type "broadcast", chaque unité multimédia est dédiée à un opérateur donné. On parle alors de marché vertical. Une unité multimédia est personnalisée spécifiquement pour cet opérateur ou appariée avec cet opérateur et contient des moyens cryptographiques (algorithmes, clés) spécifiques à cet opérateur.

L'appariement entre une unité multimédia et un opérateur spécifique se déroule de la façon suivante. Lorsqu'un fournisseur de systèmes à accès conditionnel (Conditional Access System; CAS) souhaite faire produire et sécuriser des unités multimédia, il fait tout d'abord produire des modules électroniques (chipset). Ces modules électroniques sont personnalisés par le fabricant au moyen de données secrètes qui sont fournies par le fournisseur de système à accès conditionnel.

Comme généralement le fournisseur de système à accès conditionnel fait produire des modules électroniques qui pourraient être associés à un opérateur parmi une pluralité d'opérateurs, et comme l'opérateur auquel un module électronique spécifique sera finalement associé n'est pas connu au moment de la personnalisation du module électronique, le fournisseur de système à accès conditionnel personnalise les modules avec des données qui lui sont propres et totalement indépendantes des opérateurs.

L'appariement de l'unité multimédia avec l'opérateur peut se faire de deux façons différentes : soit à la production de l'unité multimédia, soit lors de sa mise en exploitation par l'utilisateur final.

Dans le premier cas, lorsque les modules électroniques ont été personnalisés, ils sont transmis au fabricant d'unités multimédia pour être intégrés à ses unités. A ce stade, chaque unité multimédia va être associée à un opérateur spécifique de sorte qu'elle ne sera en mesure de traiter que des informations provenant de cet opérateur. Pour ceci, le fabricant d'unités multimédia doit personnaliser chaque unité multimédia en fonction de l'opérateur de destination. En d'autres termes, l'unité multimédia et l'opérateur doivent être appariés.

Pour ce faire, le fournisseur du système à accès conditionnel doit livrer des données propres à l'opérateur, en particulier des clés uniques et globales de cet opérateur, pour toutes les unités multimédia destinées à l'opérateur concerné, pour permettre ultérieurement à l'opérateur d'envoyer des données et du contenu à ces unités multimédia de façon sécurisée. Ceci implique de livrer au fabricant d'unités multimédia, l'ensemble des "données opérateur" chiffrées pour chacun des modules électroniques, ce qui représente d'énormes quantités de données. Alternativement, il est possible de fournir une unité autonome telle qu'un module matériel de sécurité connu sous l'appellation Hardware Security Module HSM, qui peut produire les données à la volée. Cette option présente l'inconvénient d'exposer les algorithmes et les clés du fournisseur de système à accès conditionnel si la sécurité du module matériel de sécurité est compromise.

Afin de réduire la quantité de données à transmettre lors de la personnalisation des unités multimédia, il serait avantageux de pouvoir produire ces unités multimédia sans données secrètes d'un opérateur et de permettre à un opérateur de personnaliser les unités multimédia à distance en utilisant par exemple le canal de diffusion de type broadcast dont il dispose généralement.

Dans le deuxième cas, c'est-à-dire dans le cas où l'unité multimédia est appariée avec l'opérateur lors de la mise en exploitation par l'utilisateur final de l'unité multimédia, c'est l'opérateur qui effectue la personnalisation des unités multimédia au travers de son système de diffusion. Pour ce faire, l'opérateur doit connaître les données secrètes qui permettent la personnalisation des unités multimédia de la même façon que le fabricant d'unités multimédia dans le cas précédent, ce qui pose deux problèmes au fournisseur du système à accès conditionnel :

- d'une part, le fournisseur doit livrer à l'opérateur une énorme quantité de données, comme il le faisait auprès du fabricant des unités multimédia ;
- d'autre part, il doit assurer que seules les unités multimédias achetées par un opérateur spécifique fonctionnent chez cet opérateur spécifique et qu'aucun autre opérateur ne puisse les utiliser.

Ce dernier point est assuré par le fabricant dans les unités multimédia conventionnelles, puisque c'est lui qui vend les unités déjà personnalisées à l'opérateur. Une unité multimédia ne peut contenir les données que d'un seul opérateur et doit quitter le fabricant pour être livrée à l'opérateur choisi, cette unité multimédia étant appariée uniquement à cet opérateur donné.

A partir du moment où l'unité multimédia n'est plus appariée de façon spécifique à un opérateur déterminé avant mise sur le marché, tous les opérateurs peuvent personnaliser toutes les unités multimédia produites. Cela engendre un risque de vol, car des unités multimédia volées peuvent être utilisées aussi bien par tous les autres opérateurs.

Afin de parer à ce risque, le fournisseur de système à accès conditionnel ne doit transmettre les données secrètes de personnalisation à un opérateur donné que pour les unités que cet opérateur a effectivement achetées au fabricant. Ceci implique de lister individuellement chaque unité produite pour un opérateur donné. Ceci pose le problème de tracer exactement les livraisons d'unités multimédia et impose des délais. En effet, lorsqu'une unité multimédia est livrée à un opérateur, ce dernier commande des clés au fournisseur de système à accès conditionnel qui les livre à l'opérateur. Cela peut impliquer un temps d'attente de plusieurs jours entre le moment où les unités multimédia sont livrées et le moment où les clés afférentes sont chez l'opérateur et sont opérationnelles pour permettre l'utilisation des unités multimédia. Cela interdit aussi l'utilisation d'un module matériel de sécurité (HSM) qui serait capable d'adresser toutes les unités multimédia.

Dans un marché horizontal, l'utilisateur achète une unité multimédia et appelle un opérateur pour activer cette unité. Il n'est pas acceptable que l'utilisateur doive attendre plusieurs jours pour activer l'unité multimédia du fait du temps de livraison des clés afférentes à l'opérateur par le fournisseur de système à accès conditionnel. Il faut donc que toutes les clés nécessaires soient livrées au préalable à l'opérateur. Cela représente une gigantesque quantité de clés puisqu'il faut toutes les clés de tous les modules électroniques produits, et non plus les clés des unités multimédia produites pour cet opérateur, puisque ces unités multimédia pourraient potentiellement être utilisées avec cet opérateur. Alternativement, un module matériel de sécurité (HSM) dédié à l'opérateur peut être utilisé pour générer les clés en fonction de l'identifiant de l'unité multimédia.

De plus, il est important que le fournisseur de système à accès conditionnel interdise à un opérateur de pouvoir "attaquer" un autre opérateur. Selon une réalisation préférée, les moyens mis à la disposition d'un opérateur ne permettent pas d'intervenir sur un autre opérateur, même si l'opérateur est capable de compromettre l'équipement du fournisseur de système à accès conditionnel installé chez lui.

Dans le cas où l'on utilise des clés livrées par le fournisseur de système à accès conditionnel à l'opérateur, ce fournisseur de système à accès conditionnel peut s'assurer que les clés livrées sont différentes pour chaque opérateur et qu'il n'est pas possible de trouver les clés d'un opérateur à partir de celles d'un autre opérateur.

Dans le cas où un module matériel de sécurité (HSM) est utilisé pour générer des clés à partir de l'identifiant des unités multimédia, ce module matériel contient un identifiant de l'opérateur pour générer des clés différentes par opérateur. L'algorithme de génération de ces clés est un secret essentiel pour le fournisseur de système à accès conditionnel. Si le module matériel de sécurité est compromis et que l'algorithme de génération de clés est dévoilé, il devient possible pour un opérateur donné de connaître et d'utiliser les clés de tous les opérateurs et de toutes les unités multimédia.

Un aspect de la présente invention se propose de résoudre les problèmes mentionnés ci-dessus en offrant une méthode qui permette à un fournisseur de système à accès conditionnel de produire des unités multimédia génériques, c'est-à-dire non liées initialement à un opérateur particulier, et permettant à un opérateur de personnaliser ces unités multimédia à distance. Cette méthode selon l'invention permet en outre d'assurer une sécurité entre opérateurs, c'est-à-dire que les connaissances qui pourraient être acquises auprès d'un opérateur ne donnent pas d'information concernant un autre opérateur.

Cette méthode permet d'attribuer de façon sécurisée une clé différente à chaque combinaison d'unité multimédia et d'opérateur en échangeant uniquement des identifiants publics.

Le document "Key distribution for Secure VSAT satellite Communications" de Jeong-Huyn Park et Sun-Bae Lim (XP-000834835) décrit une méthode pour établir une communication sécurisée entre un hub et un satellite. Selon cette méthode, des nombres aléatoires sont échangés entre les différentes entités concernées. Ces nombres aléatoires sont ensuite utilisés pour former une clé de session. Cette méthode utilise un protocole dynamique d'échange de clés. La présente invention cherche justement à éviter l'utilisation d'un tel protocole. Dans le document XP-000834835, les entités impliquées dans la génération des clés et dans l'échange de nombres aléatoires sont également impliqués dans la communication. Au contraire, dans la présente invention, l'entité de personnalisation ne participe pas à la communication.

## EXPOSE DE L'INVENTION

Certains des buts de l'invention sont atteints par une méthode d'appariement entre une unité multimédia et au moins un opérateur, selon la revendication

Certains buts de l'invention sont également atteints par une unité multimédia selon la revendication 2.

Certains buts de l'invention sont également atteints par un opérateur selon la revendication 3.

Certains buts de l'invention sont en outre atteints par un système d'accès à des données à accès conditionnel, selon la revendication 4.

Certains buts de l'invention sont encore atteints par une entité de personnalisation selon la revendication 5.

L'invention peut être utilisée dans une configuration dans laquelle l'unité multimédia n'a pas de voie de retour ou de moyens de communication automatique permettant de transmettre des informations vers l'opérateur. Dans ce cas, il est possible de communiquer l'identifiant de l'unité multimédia par téléphone. Dans cette configuration, il est préférable que l'identifiant de l'unité multimédia soit facile à transmettre par téléphone par un utilisateur à un centre d'appel de l'opérateur.

Selon une variante, l'identifiant de l'unité multimédia peut être communiqué par différentes voies à l'opérateur, par exemple par e-mail, par introduction sur un site Internet dédié de l'opérateur, par communication avec un dispositif de communication tel qu'un téléphone portable, une tablette tactile, ... Selon une variante, l'identifiant est lu localement par lecture avec ou sans contact par un appareil de communication tel qu'un téléphone portable, puis transmis par un réseau tel qu'un réseau GSM. L'identifiant peut notamment être matérialisé sous forme de chaîne de caractères alphanumériques, sous forme de code barre ou de QR code.

L'opérateur reçoit de la part du fournisseur de système à accès conditionnel un identifiant unique et une clé spécifique liés à cet identifiant. La méthode de calcul de la clé spécifique de l'opérateur utilise des données secrètes que seul possède le fournisseur de système à accès conditionnel. De même, l'unité multimédia reçoit de la part du fournisseur de système à accès conditionnel, lors de la personnalisation du module électronique, un identifiant unique d'unité multimédia et une clé spécifique liés à cet identifiant d'unité multimédia. La méthode de calcul de la clé spécifique de l'unité multimédia utilise également des données secrètes que seul possède le fournisseur de système à accès conditionnel.

Lorsque l'identifiant de l'unité multimédia est transmis à l'opérateur avec lequel cette unité multimédia doit être appariée, cet opérateur est en mesure de calculer une clé d'appariement.

De façon symétrique, lorsque l'unité multimédia reçoit l'identifiant de l'opérateur avec lequel elle doit être appariée, cette unité multimédia est en mesure de calculer la même clé d'appariement. De plus, la clé d'appariement obtenue est unique pour le couple unité multimédia - opérateur. Il est à noter qu'une unité multimédia utilisant une seule clé peut ainsi partager une clé unique avec n'importe quel opérateur et vice-versa.

Afin de réaliser un appariement de façon satisfaisante, il est important qu'au moins certaines fonctions utilisées lors du calcul de la clé d'appariement soient cryptographiquement sûres faute de quoi l'appariement sera peu sûr. Les termes "cryptographiquement sûres" signifient ici que dans le cas où la clé d'appariement est formée par une opération ou fonction appliquée à une clé de personnalisation et à un identifiant, la connaissance de l'identifiant et du résultat de la combinaison ne permet pas de déduire facilement la clé de personnalisation, ni le résultat de la combinaison pour un autre identifiant.

Les fonctions de chiffrement cryptographiques sûres connues sous les acronymes DES ou AES répondent à cette définition de "cryptographiquement sûres", mais elles ne permettent pas de générer la même clé d'appariement chez l'opérateur et dans l'unité multimédia.

La méthode selon l'un des aspects de l'invention permet d'attribuer des clés différentes et indépendantes à chaque opérateur. De cette manière, la sécurité d'un opérateur est indépendante de la sécurité des autres opérateurs et la compromission d'une clé d'un opérateur n'a aucun effet sur la sécurité des autres opérateurs.

Selon la méthode de l'invention, il est possible d'apparier plusieurs opérateurs à une même unité multimédia sans que la sécurité liée à un opérateur soit mise en péril du fait de l'appariement à un ou plusieurs autres opérateurs. Pour réaliser cet appariement multiple, il suffit d'appliquer la méthode pour chaque opérateur concerné différent.

## DESCRIPTION SOMMAIRE DES DESSINS

La présente invention et ses avantages seront mieux compris en référence aux figures annexées et à la description détaillée d'un mode de réalisation particulier, dans lesquelles :

- la figure 1 représente le système selon la présente invention;

- la figure 2 illustre sous forme de schéma bloc, une méthode de chiffrement selon un aspect de l'invention; et

- la figure 3 est un schéma bloc représentant la méthode de déchiffrement selon un aspect de la présente invention.

## MANIERES DE REALISER L'INVENTION

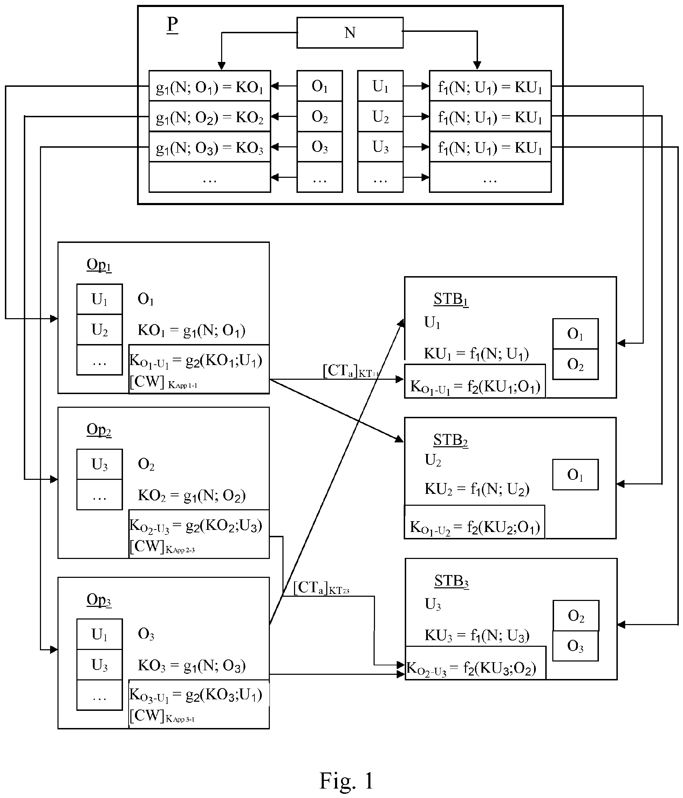

La figure 1 représente les différentes entités utilisées dans le cadre de l'invention et pour la mise en oeuvre de la méthode selon cette invention.

Dans l'exemple particulier illustré, trois opérateurs différents ont été représentés. Ces opérateurs sont notés respectivement $Op_1$, $Op_2$ et $Op_3$. Trois unités multimédia ont également été représentées et portent les références $STB_1$, $STB_2$ et $STB_3$. Toutes ces unités multimédia et tous les opérateurs sont liés à une entité de personnalisation P.

L'entité de personnalisation P dispose d'une clé de personnalisation N secrète qui n'est transmise à aucune autre entité. Cette entité de personnalisation dispose en outre d'une liste d'identifiants correspondant d'une part à un identifiant $O_{ID}$ spécifique à chaque opérateur Op et d'autre part, à un identifiant $U_{ID}$ spécifique à chaque unité multimédia STB.

L'identifiant spécifique à chaque unité multimédia, noté $U_{ID}$ peut être introduit dans ces unités multimédia lors de leur personnalisation par le fabricant de modules électroniques (Chipset). De manière similaire, chaque opérateur dispose d'un identifiant spécifique, noté $O_{ID}$, qui lui est transmis par l'entité de personnalisation. Cette entité de personnalisation dispose de moyens de calculs lui permettant de traiter l'identifiant d'opérateur $O_{ID}$ comme cela est expliqué plus bas, afin de permettre à cet opérateur de transférer du contenu à accès conditionnel à une unité multimédia gérée par cette entité de personnalisation.

Il est à noter que la personnalisation d'une unité multimédia se fait de façon indépendante de l'opérateur ou des opérateurs avec lesquels cette unité multimédia communique. Dans la majorité des cas, la personnalisation est faite avant de savoir à quel opérateur cette unité multimédia sera associée. Selon l'invention, il est possible d'associer une unité multimédia simultanément à plusieurs opérateurs.

Lors de la personnalisation d'une unité multimédia, les moyens de calcul de l'entité de personnalisation P calculent une clé d'unité multimédia $KU_{ID}$, cette clé étant obtenue en appliquant une première fonction mathématique cryptographiquement sûre, notée $f_1$, à la clé de personnalisation N et à l'identifiant de l'unité multimédia $U_{ID}$. On a $KU_{ID} = f_1(N; U_{ID})$ ou par exemple $KU_1 = f_1(N_1; U_1)$ pour l'unité multimédia $STB_1$ ayant $U_1$ comme identifiant. La clé ainsi obtenue est transmise à l'unité multimédia concernée. Cette transmission se fait en principe lors de la personnalisation, c'est-à-dire lorsque le couple $(U_{ID}KU_{ID})$ est inscrit dans l'unité multimédia, mais elle pourrait également être faite ultérieurement, par exemple par transmission dans un message sécurisé. Lorsque le couple $(U_{ID}KU_{ID})$ est inscrit dans l'unité multimédia lors de la personnalisation, il est facile pour l'entité de personnalisation de fournir à l'avance, une grande liste de couples $(U_{ID}KU_{ID})$ au fabricant d'unités multimédia.

La fonction mathématique utilisée pour former la clé d'unité multimédia $KU_{ID}$ à partir de l'identifiant $U_{ID}$ de cette unité multimédia et de la clé de personnalisation N ou ladite première fonction mathématique $f_1$ a de préférence des propriétés particulières. Ces propriétés sont telles que :

- la connaissance de la clé d'unité multimédia ($KU_{ID}$) et de l'identifiant d'unité multimédia ($U_{ID}$) ne permet pas de calculer la clé de personnalisation (N);
- la connaissance d'une première clé d'unité multimédia ($KU_{ID}$) calculée pour une unité multimédia ayant un premier identifiant d'unité multimédia ($U_{ID}$) ne permet pas de calculer une deuxième clé d'unité multimédia ($KU_{ID*}$) pour une unité multimédia ayant un deuxième identifiant d'unité multimédia ($U_{ID*}$) différent dudit premier identifiant d'unité multimédia ($U_{ID}$);
- la connaissance de l'identifiant d'unité multimédia ($U_{ID}$) sans connaître la clé de personnalisation (N) ne permet pas de calculer la clé d'unité multimédia ($KU_{ID}$).

Avec ces propriétés, il est possible de rendre public l'identifiant $U_{ID}$ de l'unité multimédia sans que cela n'entraîne un risque de compromettre la clé de cette unité multimédia $KU_{ID}$ et/ou la clé de personnalisation N.

L'entité de personnalisation P dispose également de l'identifiant des opérateurs avec lesquels cette entité coopère. Cet identifiant $O_{ID}$ peut être public. L'entité de personnalisation P calcule une clé d'opérateur $KO_{ID}$ en appliquant une seconde fonction mathématique, notée $g_1$, cryptographiquement sûre, à la clé de personnalisation N et à l'identifiant de l'opérateur $O_{ID}$. On a ainsi $KO_{ID} = g_1 (N; O_{ID})$ ou par exemple pour l'opérateur $Op_1$, $KO_1 = g_1 (N; O_1)$. Cette fonction $g_1$ a les mêmes propriétés que la fonction $f_1$, à savoir que :

- la connaissance de la clé d'opérateur ($KO_{ID}$) et de l'identifiant d'opérateur ($O_{ID}$) ne permet pas de calculer la clé de personnalisation (N);
- la connaissance d'une première clé d'opérateur ($KO_{ID}$) calculée pour un opérateur ayant un premier identifiant d'opérateur ($O_{ID}$) ne permet pas de calculer une deuxième clé d'opérateur ($KO_{ID*}$) pour un opérateur ayant un deuxième identifiant d'opérateur ($O_{ID*}$) différent dudit premier identifiant d'opérateur ($O_{ID}$);
- la connaissance de l'identifiant d'opérateur ($O_{ID}$) sans connaître la clé de personnalisation (N) ne permet pas de calculer la clé d'opérateur ($KO_{ID}$).

Ces propriétés correspondent à la caractéristique "cryptographiquement sûre".

Les clés d'opérateurs $KO_{ID}$ calculées par l'entité de personnalisation sont ensuite livrées aux opérateurs concernés de manière confidentielle. A ce stade, chaque opérateur dispose de son identifiant $O_{ID}$ et de sa clé d'opérateur $KO_{ID}$ calculés et transmis par l'entité de personnalisation P.

Finalement, pour que l'unité multimédia et l'opérateur puissent communiquer de façon sécurisée, il faut qu'ils puissent déduire une clé commune à partir des informations confidentielles dont ils disposent et de l'information publique de l'autre entité.

Ainsi, il faut que l'opérateur puisse calculer une clé unique $K_{OID-UID}$ appelée clé d'appariement. Cette clé d'appariement est calculée en appliquant une fonction d'opérateur $g_2$ cryptographiquement sûre à la clé d'opérateur $KO_{ID}$ et à l'identifiant de l'unité multimédia $U_{10}$ à laquelle cet opérateur est à apparier. On a ainsi $K_{OID-UID} = g_2 (KO_{ID}, U_{ID})$ ou par exemple pour l'opérateur $Op_1$ et l'unité multimédia $U_1$, $K_{O1-U_1} = g_2 (KO_1; U_1)$. Cette fonction d'opérateur $g_2$ a les mêmes propriétés que la première fonction $f_1$. Plus précisément, la fonction d'opérateur $g_2$ cryptographiquement sûre est telle que :

- la connaissance de la clé d'appariement ($K_{OID-UID}$) et de l'identifiant d'unité multimédia ($U_{ID}$) ne permet pas de calculer la clé d'opérateur ($KO_{ID}$);
- la connaissance d'une première clé d'appariement ($K_{OID-UID}$) calculée pour une unité multimédia ayant un premier identifiant d'unité multimédia ($U_{ID}$) et un opérateur ayant une première clé d'opérateur $KO_{ID}$ ne permet pas de calculer une deuxième clé d'appariement ($K_{OID*-UID*}$) pour une unité multimédia ayant un deuxième identifiant d'unité multimédia ($U_{ID*}$) différent dudit premier identifiant d'unité multimédia ($U_{ID}$) et/ou un opérateur ayant une deuxième clé d'opérateur $KO_{ID*}$ différente de ladite première clé d'opérateur $KO_{ID}$;
- la connaissance de l'identifiant d'unité multimédia ($U_{ID}$) sans connaître la clé d'opérateur ($KO_{ID}$) ne permet pas de calculer la clé d'appariement ($K_{OID-UID}$),
- la connaissance de ladite clé d'opérateur $KO_{ID}$ sans connaître l'identifiant d'unité multimédia $U_{ID}$ ne permet pas de calculer la clé d'appariement ($K_{OID-UID}$).

Ces propriétés correspondent à la caractéristique "cryptographiquement sûre".

De façon symétrique, il faut que l'unité multimédia puisse calculer la même clé unique $K_{OID-UID}$ en appliquant une fonction d'unité multimédia $f_2$ cryptographiquement sûre à sa clé $KU_{ID}$ et à l'identifiant de l'opérateur $O_{ID}$ auquel elle doit être appariée. On a ainsi $K_{OID-UID} = f_2 (KU_{ID}, O_{ID})$ ou par exemple pour l'opérateur $Op_1$ et l'unité multimédia $U_1$, $K_{O1-U_1} = f_2 (KU_1, O_1)$. Cette fonction d'unité multimédia $f_2$ a les mêmes propriétés que la fonction d'opérateur $g_2$. Plus précisément, la fonction de l'unité multimédia $f_2$ est telle que :

- la connaissance de la clé d'appariement ($K_{O_{ID}\text{-}U_{ID}}$) et de l'identifiant d'opérateur ($O_{ID}$) ne permet pas de calculer la clé de l'unité multimédia ($KU_{ID}$);
- la connaissance d'une première clé d'appariement ($K_{O_{ID}\text{-}U_{ID}}$) calculée pour un opérateur ayant un premier identifiant d'opérateur ($O_{ID}$) et une unité multimédia ayant une première clé d'unité multimédia $KU_{ID}$ ne permet pas de calculer une deuxième clé d'appariement $K_{O_{ID}\text{-}U_{ID}}$ pour un opérateur ayant un deuxième identifiant d'opérateur ($O_{ID*}$) différent dudit premier identifiant d'opérateur ($O_{ID}$) et/ou une unité multimédia ayant une deuxième clé d'unité multimédia $KU_{ID*}$ différente de ladite première clé d'unité multimédia;
- la connaissance de l'identifiant d'opérateur ($O_{ID}$) sans connaître la clé d'unité multimédia ($KU_{ID}$) ne permet pas de calculer la clé d'appariement ($K_{O_{ID}\text{-}U_{ID}}$);
- la connaissance de la clé d'unité multimédia $KU_{ID}$ sans connaître l'identifiant d'opérateur $O_{ID}$ ne permet pas de calculer la clé d'appariement ($K_{O_{ID}\text{-}U_{ID}}$).

Ces propriétés correspondent à la caractéristique "cryptographiquement sûre".

Les fonctions mathématiques utilisées dans la présente invention devraient remplir la condition suivante, exprimé sous forme mathématique :

$$g_2(g_1(A; C); B) = f_2(f_1(A; B); C)$$

où $f_1$ est ladite première fonction cryptographiquement sûre; $g_1$ est ladite deuxième fonction cryptographiquement sûre; $f_2$ est ladite fonction d'unité multimédia, $g_2$ est ladite fonction d'opérateur, et A, B et C sont des variables d'entrée des ces fonctions.

En reprenant les références utilisées dans la présente invention, cette condition signifie que :

$$g_2(g_1(N; O_{ID}); U_{ID}) = f_2(f_1(N; U_{ID}); O_{ID})$$

Si cette condition est remplie, on aura :

$$K_{O_{ID}\text{-}U_{ID}} = g_2(KO_{ID}; U_{ID}) = g_2[g_1(N; O_{ID}); U_{ID}] = f_2[f_1(N; U_{ID}); O_{ID}] =$$

$$f_2(KO_{ID}; O_{ID}) = K_{O_{ID}\text{-}U_{ID}}$$

Lorsqu'un utilisateur souhaite pouvoir recevoir du contenu à accès conditionnel d'un opérateur donné, l'unité multimédia de cet utilisateur et cet opérateur doivent s'apparier. Pour ceci, l'utilisateur transmet l'identifiant $U_{ID}$ de son unité multimédia à l'opérateur. Généralement, lorsque l'invention se place dans un système de communication de type broadcast, il n'y a pas de voie de communication automatique ou de voie de retour de l'unité multimédia vers l'opérateur. La transmission de l'identifiant de l'unité multimédia à l'opérateur est donc faite par l'utilisateur. Cette transmission peut être faite par exemple par téléphone, l'utilisateur indiquant un identifiant qui peut être imprimé sur un support physique tel que l'unité multimédia, un document imprimé livré séparément ou une carte à puce par exemple. Comme indiqué précédemment, la transmission de l'identifiant de l'unité multimédia peut également être faite par d'autres moyens, et notamment par une voie de retour si une telle voie de retour est disponible.

Lorsque l'identifiant de l'unité multimédia est transmis à l'opérateur, ce dernier peut calculer la clé d'appariement $K_{O_{ID}\text{-}U_{ID}}$ définie par la méthode précédemment décrite. L'opérateur peut donc envoyer par le canal de diffusion, son identifiant $O_{ID}$ afin de permettre à l'unité multimédia de calculer la même clé d'appariement $K_{O_{ID}\text{-}U_{ID}}$. Cette clé d'appariement peut ensuite être utilisée pour chiffrer des messages et les envoyer à l'unité multimédia, de telle façon que seule cette unité multimédia puisse les déchiffrer.

A priori, la clé d'appariement peut être utilisée pour chiffrer des messages contenant des droits, tels que des messages de gestion EMM (Entitlement Management Message) ou une clé de transmission. Bien que cela soit possible, le chiffrement de données à accès conditionnel par la clé d'appariement n'est pas idéal. En effet, cette clé d'appariement devant si possible ne pas être trop exposée, une utilisation à grande échelle n'est pas optimale.

Connaissant les identifiants $U_{ID}$ de toutes les unités multimédia auxquelles il veut envoyer du contenu, il suffit maintenant à l'opérateur de distribuer de façon classique des clés de contenu ainsi que des droits afin de permettre à ces unités de déchiffrer les données à accès conditionnel diffusées sur le canal de l'opérateur. La façon de gérer l'accès conditionnel est connu de l'état de l'art et n'est pas décrit plus avant.

Dans l'exemple illustré par la figure 1, l'opérateur ayant l'identifiant $O_1$ dispose des identifiants $U_1$ et $U_2$ correspondant respectivement aux unités multimédia $STB_1$ et $STB_2$ auxquelles cet opérateur est en mesure d'envoyer des clés de contenu et des données à accès conditionnel. L'opérateur ayant l'identifiant d'opérateur $O_2$ connaît l'identifiant $U_3$ de l'unité multimédia $STB_3$ à laquelle il peut envoyer des clés de contenu et des données à accès conditionnel et l'opérateur ayant l'identifiant d'opérateur $O_3$ connaît les identifiants $U_1$ et $U_3$ des unités multimédia $STB_1$ et $STB_3$ auxquelles cet opérateur $Op_3$ peut envoyer des clés de contenu et des données à accès conditionnel.

Ces identifiants d'unité multimédia peuvent être publics et leur connaissance ne donne aucune information à une personne souhaitant tester la sécurité du système, de par les propriétés des fonctions cryptographiques permettant le calcul des clés.

De manière similaire, l'unité multimédia ayant l'identifiant $U_1$ connaît les identifiants $O_1$ et $O_3$ des opérateurs desquels elle peut obtenir des données à accès conditionnel; l'unité multimédia ayant l'identifiant $U_2$ connaît l'identifiant $O_1$ de l'opérateur duquel cette unité peut obtenir des données à accès conditionnel et l'unité multimédia ayant l'identifiant $U_3$ dispose des identifiants $O_2$ et $O_3$ des opérateurs desquels cette unité peut obtenir des données à accès conditionnel.

Dans ce cas également, les identifiants d'opérateurs ne constituent pas une information sensible et la transmission de ces identifiants aux unités multimédia concernées peut se faire en clair ou de façon chiffrée, sans qu'une grande attention ne doive être portée au procédé de chiffrement utilisé.

Lorsque les opérateurs ont reçu les identifiants $U_{ID}$ des unités multimédia avec lesquelles ils doivent être appariés, ils calculent les clés d'appariement respectives $K_{O_{ID}-U_{ID}}$ en appliquant la fonction de l'opérateur $g_2$ au couple "clé d'opérateur $KO_{ID}$ - Identifiant d'unité multimédia $U_{ID}$".

De manière symétrique, lorsque les unités multimédia ont reçu les identifiants $O_{ID}$ des opérateurs avec lesquelles ils doivent être appariés, ils calculent les clés d'appariement respectives $K_{O_{ID}-U_{ID}}$ en appliquant la fonction de l'unité multimédia $g_1$ au couple "Clé d'unité multimédia $KU_{ID}$ - identifiant d'opérateur $O_{ID}$".

Tous les couples opérateur - unité multimédia disposent ainsi d'une clé qui est spécifique à chaque couple et qui est commune aux deux éléments du couple.

La clé d'appariement calculée entre un opérateur donné et une unité multimédia donnée pourrait être utilisée directement pour chiffrer un contenu à transmettre depuis l'opérateur à l'unité multimédia concernée. En pratique, ceci n'est toutefois généralement pas fait. Dans le contexte d'une diffusion de type broadcast, le contenu est chiffré par des mots de contrôle qui sont identiques pour un ensemble d'unités multimédia. Comme la clé d'appariement est différente pour chaque couple opérateur - unité multimédia, elle ne peut pas être utilisée pour chiffrer un contenu de façon identique pour plusieurs unités multimédia.

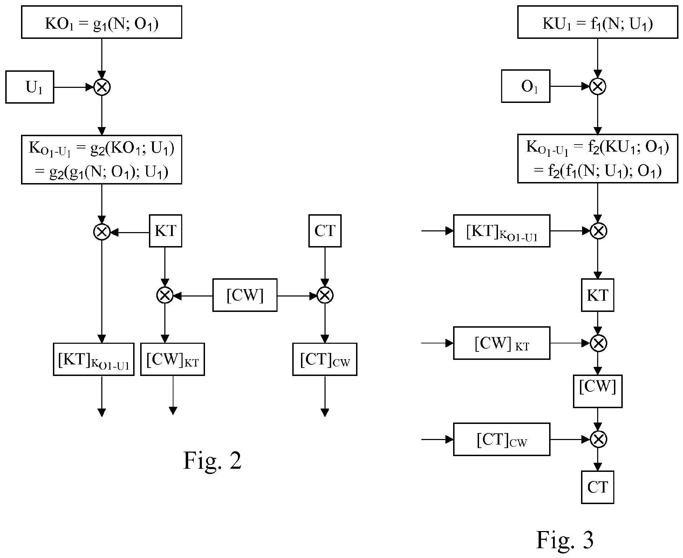

Dans la pratique, dans un mode de diffusion de type broadcast et comme cela est illustré par la figure 2, des données à accès conditionnel CT sont chiffrées au moyen de mots de contrôle CW, indépendants des unités multimédia auxquelles ces données sont destinées. Ces données chiffrées sont ensuite diffusées de telle façon qu'au moins les unités multimédia auxquelles ces données sont destinées, puissent les recevoir.

Les mots de contrôle sont à leur tour chiffrés par une clé de transmission KT et transmis au moins aux unités multimédia concernées. Finalement, la clé de transmission est chiffrée au moyen d'une clé spécifique à chaque unité multimédia et plus spécifiquement, à chaque couple opérateur - unité multimédia. Cette clé peut être la clé d'appariement entre l'opérateur et l'unité multimédia ou une clé dérivée de cette clé d'appariement.

Le déchiffrement est illustré par la figure 3. Une unité multimédia reçoit des données à accès conditionnel CT chiffrées par des mots de contrôle CW, des messages contenant au moins un mot de contrôle et chiffrés par une clé de transmission KT et des messages contenant au moins une clé de transmission et chiffrés par une clé spécifique au couple opérateur - unité multimédia. Cette dernière clé peut être la clé d'appariement ou une clé qui en dérive.

Pour accéder aux données à accès conditionnel en clair, l'unité multimédia calcule, par des moyens de calcul de cette unité multimédia la clé d'appariement au moyen de la fonction de l'unité multimédia $KU_1$ et de l'identifiant d'opérateur $O_1$. Cette clé d'appariement permet d'accéder à la clé de transmission KT, ce qui permet d'obtenir les mots de contrôle CW. Ces mots de contrôle CW peuvent ensuite être utilisés pour déchiffrer les données à accès conditionnel.

Dans un mode de transmission point à point par exemple, la clé d'appariement ou une clé qui en dérive pourrait être utilisée pour chiffrer directement un contenu.

Comme indiqué précédemment, les fonctions utilisées dans le cadre de l'invention répondent aux conditions suivantes :

- Si $U_{ID}$ et $KU_{ID} = f_1(N; U_{ID})$ sont connus, il n'est pas possible de calculer N

- Si $O_{ID}$ et $KO_{ID} = g_1(O_{ID}, N)$ sont connus, il n'est pas possible de calculer N

- Quel que soit le nombre de couples $(U_{ID}; g_1(N; O_{ID}))$ et $(O_{ID}; f_1(N; U_{ID}))$ connus, il est difficile de calculer $KU_{ID}$ (respectivement $KO_{ID}$) pour un $U_{ID}$ (resp. $O_{ID}$) différent.

- $g_2 (g_1(N; O_{ID}); U_{ID}) = f_2 (f_1(N; U_{ID}); O_{ID})$

Parmi les fonctions mathématiques qui remplissent ces conditions, il y a notamment une fonction d'exponentiation modulaire. Une telle fonction peut être exprimée de la manière suivante :

$$f(a,b) = a^{H(b)} \bmod m$$

où a et b sont les variables d'entrée de la fonction, H est une fonction cryptographique de hachage et m est le produit de deux grands nombres premiers p et q.

Une telle fonction d'exponentiation peut être utilisée pour calculer la clé d'opérateur $KO_{ID}$ à partir de la clé de personnalisation N et de l'identifiant de l'opérateur $O_{ID}$. On a :

$$KO_{ID} = g_1 (N; O_{ID}) = N^{H(O_{ID})} \bmod m$$

Il est à noter que le nombre m est connu aussi bien des unités multimédia que des opérateurs. Ils ne doivent par contre pas connaître p et q.

Une fonction similaire peut être utilisée pour calculer la clé d'unité multimédia $KU_{ID}$ à partir de la clé de personnalisation N et de l'identifiant de l'unité multimédia $U_{ID}$. On a :

$$KU_{ID} = f_1 (N; U_{ID}) = N^{H(U_{ID})} \bmod m$$

où la valeur de m utilisée dans cette formule est identique à la valeur de m définie ci-dessus.

De façon générale, on peut utiliser

$$f_1(a;b) = f_2(a;b) = g_1(a;b) = g_2(a;b) = a^{H(b)} \bmod m$$

On peut montrer qu'en utilisant une telle exponentiation modulaire, on aura

$$g_2(KO_1;U_1) = KO_1^{H(U_1)} \bmod m$$

En remplaçant $KO_1$ par $g_1(N;O_1) = N^{H(O_1)} \bmod m,$ on a :

$$g_2(KO_1;U_1) = KO_1^{H(U_1)} \bmod m = [N^{H(O_1)} \bmod m]^{H(U_1)} \bmod m$$

De manière similaire,

$$f_2(KU_1;O_1) = KU_1^{H(O_1)} \bmod m$$

En remplaçant $KU_1$ par $f_1(N;U_1) = N^{H(U_1)} \bmod m,$ on a :

$$f_2(KU_1;O_1) = KU_1^{H(O_1)} \bmod m = [N^{H(U_1)} \bmod m]^{H(O_1)} \bmod m$$

Comme $[N^{H(O_1)} \bmod m]^{H(U_1)} \bmod m = [N^{H(U_1)} \bmod m]^{H(O_1)} \bmod m,$ on a bien :

$$g_2 (g_1(N; O_{ID}); U_{ID}) = f_2 (f_1(N; U_{ID}); O_{ID})$$

De façon plus générale, les fonctions mathématiques qu'il est possible d'utiliser pour aboutir au résultat souhaité sont les fonctions dites quasi-commutatives. Les fonctions f et g sont dite quasi-commutatives si :

$$f(g(x; y_1); y_2) = g(f(x; y_2); y_1)$$

où "=" signifie égal presque partout ou en d'autres termes, égal sauf pour un nombre fini de valeurs.

La méthode d'appariement selon l'invention permet d'apparier une unité multimédia avec un ou plusieurs opérateurs en échangeant entre eux uniquement des données publiques. Cette méthode permet de calculer une clé d'appariement aussi bien dans l'unité multimédia que chez l'opérateur. La connaissance des secrets d'un opérateur n'a aucune influence sur la sécurité des autres opérateurs.

De cette manière, le nombre d'unités multimédia avec lesquelles un opérateur peut communiquer n'est pratiquement pas limité et la génération des clés se fait de façon efficace, sans qu'il soit nécessaire de transmettre un grand nombre de clés inutiles ou sans qu'il soit nécessaire d'attendre pendant un temps important avant que l'unité multimédia fonctionne.

**Revendications**

1. Méthode d'appariement entre une unité multimédia (STB) et au moins un opérateur (Op), l'unité multimédia (STB) étant destinée à recevoir des données à accès conditionnel dudit opérateur (Op), l'unité multimédia disposant d'un identifiant d'unité multimédia ($U_{ID}$), l'opérateur disposant d'un identifiant d'opérateur ($O_{ID}$), la méthode comprenant les étapes suivantes:

   - l'unité multimédia reçoit une clé d'unité multimédia ($KU_{ID}$) issue d'une première fonction ($f_1$) cryptographiquement sûre;
   - l'opérateur reçoit une clé d'opérateur ($KO_{ID}$) issue d'une deuxième fonction ($g_1$) cryptographiquement sûre; ladite unité multimédia disposant en outre d'une fonction mathématique d'unité multimédia ($f_2$) et ledit opérateur disposant en outre d'une fonction mathématique d'opérateur ($g_2$), ces fonctions mathématiques ($f_2$, $g_2$) utilisant un produit m de deux grands nombres premiers p et q;
   - l'opérateur (Op) génère une clé d'appariement ($K_{O_{ID}-U_{ID}}$), entre ladite unité multimédia (STB) et ledit opérateur (Op), en utilisant la clé d'opérateur ($KO_{ID}$) comme première variable de la fonction mathématique d'opérateur ($g_2$);
   - l'unité multimédia (STB) génère la même clé d'appariement ($K_{O_{ID}-U_{ID}}$) en utilisant ladite clé d'unité multimédia ($KU_{ID}$) comme première variable de la fonction mathématique d'unité multimédia ($f_2$);

   la méthode étant **caractérisée en ce que**:

   ladite clé d'unité multimédia ($KU_{ID}$) et ladite clé d'opérateur ($KO_{ID}$) sont déterminées et mises à disposition par une entité de personnalisation (P);
   chacune desdites fonctions ($f_1$, $g_1$, $f_2$, $g_2$) étant une fonction d'exponentiation modulaire d'expression :

$$f(a,b) = a^{H(b)} \bmod m$$

   où a et b sont les première et seconde variables de la fonction, H est une fonction cryptographique de hachage et m est ledit produit des deux grands nombres premiers p et q;
   ladite première fonction ($f_1$), utilisée pour calculer la clé d'unité multimédia ($KU_{ID}$), admet comme première et seconde variables respectivement une clé de personnalisation (N) secrète propre à l'entité de personnalisation (P) et l'identifiant ($U_{ID}$) de l'unité multimédia (STB);
   ladite deuxième fonction ($g_1$), utilisée pour calculer la clé d'opérateur ($KO_{ID}$), admet comme première et seconde variables respectivement ladite clé de personnalisation (N) et l'identifiant ($O_{ID}$) de l'opérateur (Op);
   ladite fonction mathématique d'unité multimédia ($f_2$), utilisée par l'unité multimédia (STB) pour calculer ladite clé d'appariement ($K_{O_{ID}-U_{ID}}$), admet comme seconde variable l'identifiant ($O_{ID}$) de l'opérateur; et
   ladite fonction mathématique d'operateur ($g_2$), utilisée par l'operateur (Op) pour calculer ladite clé d'appariement ($K_{O_{ID}-U_{ID}}$), admet comme seconde variable l'identifiant de unité multimédia ($U_{ID}$).

2. Unité multimédia (STB) destinée à être appariée à au moins un opérateur (Op), cette unité multimédia (STB) disposant:

- d'un identifiant d'unité multimédia ($U_{ID}$),
- d'une clé d'unité multimédia ($KU_{ID}$) issue d'une première fonction ($f_1$) cryptographiquement sûre,
- d'une fonction mathématique d'unité multimédia ($f_2$) utilisant un produit m de deux grands nombres premiers p et q, et
- de moyens de calcul pour générer une clé d'appariement ($K_{OID-UID}$) entre ladite unité multimédia (STB) et l'opérateur (Op) en utilisant ladite clé d'unité multimédia ($KU_{ID}$) comme première variable de la fonction mathématique d'unité multimédia ($f_2$),

**caractérisée en ce que**:

ladite clé d'unité multimédia ($KU_{ID}$) est déterminée et mise à disposition par une entité de personnalisation (P); chacune desdites fonctions ($f_1$, $f_2$) étant une fonction d'exponentiation modulaire d'expression:

$$f(a,b) = a^{H(b)} \bmod m$$

où a et b sont les première et seconde variables de la fonction, H est une fonction cryptographique de hachage et m est ledit produit des deux grands nombres premiers p et q; ladite première fonction ($f_1$), utilisée pour calculer la clé d'unité multimédia ($KU_{ID}$), admet comme première et seconde variables respectivement une clé de personnalisation (N) secrète propre à l'entité de personnalisation (P) et l'identifiant ($U_{ID}$) de l'unité multimédia (STB); et ladite fonction mathématique d'unité multimédia ($f_2$), utilisée par les moyens de calcul de l'unité multimédia (STB) pour calculer ladite clé d'appariement ($K_{OID-UID}$), admet comme seconde variable l'identifiant ($O_{ID}$) de l'opérateur (Op).

3. Opérateur (Op) destiné à être apparié à au moins une unité multimédia (STB), cet opérateur (Op) disposant:

- d'un identifiant d'opérateur ($O_{ID}$),
- d'une clé d'opérateur ($KO_{ID}$) issue d'une deuxième fonction ($g_1$) cryptographiquement sûre,
- d'une fonction mathématique d'opérateur ($g_2$) utilisant un produit m de deux grands nombres premiers p et q, et
- de moyens de calcul pour générer une clé d'appariement ($K_{OID-UID}$) entre ladite unité multimédia (STB) et l'opérateur (Op) en utilisant ladite clé d'opérateur ($KO_{ID}$) comme première variable de la fonction mathématique d'opérateur ($g_2$),

**caractérisé en ce que**:

ladite clé d'opérateur ($KO_{ID}$) est déterminée et mise à disposition par une entité de personnalisation (P); chacune desdites fonctions ($g_1$, $g_2$) étant une fonction d'exponentiation modulaire d'expression:

$$g(a,b) = a^{H(b)} \bmod m$$

où a et b sont les première et seconde variables de la fonction, H est une fonction cryptographique de hachage et m est ledit produit des deux grands nombres premiers p et q; ladite deuxième fonction ($g_1$), utilisée pour calculer la clé d'opérateur ($KO_{ID}$), admet comme première et seconde variables respectivement une clé de personnalisation (N) secrète propre à l'entité de personnalisation (P) et l'identifiant ($O_{ID}$) de l'opérateur (Op); et ladite fonction mathématique d'opérateur ($g_2$), utilisée par les moyens de calcul de l'opérateur (Op) pour calculer ladite clé d'appariement ($K_{OID-UID}$), admet comme seconde variable l'identifiant ($U_{ID}$) de l'unité multimédia (STB).

4. Système d'accès à des données à accès conditionnel transmises à au moins une unité multimédia (STB) par au moins un opérateur (Op) avec lequel ladite unité multimédia est à apparier, l'unité multimédia (STB) disposant:

- d'un identifiant d'unité multimédia ($U_{ID}$),
- d'une clé d'unité multimédia ($KU_{ID}$) issue d'une première fonction ($f_1$) cryptographiquement sûre,
- d'une fonction mathématique d'unité multimédia ($f_2$) utilisant un produit m de deux grands nombres premiers p et q, et
- de moyens de calcul pour générer une clé d'appariement ($K_{O_{ID}-U_{ID}}$) entre ladite unité multimédia (STB) et ledit opérateur (Op) en utilisant ladite clé d'unité multimédia ($KU_{ID}$) comme première variable de la fonction mathématique d'unité multimédia ($f_2$);

l'opérateur (Op) disposant:

- d'un identifiant d'opérateur ($O_{ID}$),
- d'une clé d'opérateur ($KO_{ID}$) issue d'une deuxième fonction ($g_1$) cryptographiquement sûre,
- d'une fonction mathématique d'opérateur ($g_2$) utilisant ledit produit m des deux grands nombres premiers p et q, et
- de moyens de calcul pour générer la même clé d'appariement ($K_{O_{ID}-U_{ID}}$) en utilisant ladite clé d'opérateur ($KO_{ID}$) comme première variable de la fonction mathématique d'opérateur ($g_2$),

**caractérisé en ce que**:

ladite clé d'unité multimédia ($KU_{ID}$) et ladite clé d'opérateur ($KO_{ID}$) sont déterminées et mises à disposition par une entité de personnalisation (P);
chacune desdites fonctions ($f_1$, $g_1$, $f_2$, $g_2$) étant une fonction d'exponentiation modulaire d'expression :

$$f(a,b) = a^{H(b)} \bmod m$$

où a et b sont les première et seconde variables de la fonction, H est une fonction cryptographique de hachage et m est ledit produit des deux grands nombres premiers p et q;
ladite première fonction ($f_1$), utilisée pour calculer la clé d'unité multimédia ($KU_{ID}$), admet comme première et seconde variables respectivement une clé de personnalisation (N) secrète propre à l'entité de personnalisation (P) et l'identifiant ($U_{ID}$) de l'unité multimédia (STB);
ladite deuxième fonction ($g_1$), utilisée pour calculer la clé d'opérateur ($KO_{ID}$), admet comme première et seconde variables respectivement ladite clé de personnalisation (N) et l'identifiant ($O_{ID}$) de l'opérateur (Op);
ladite fonction mathématique d'unité multimédia ($f_2$), utilisée par l'unité multimédia (STB) pour calculer ladite clé d'appariement ($K_{O_{ID}-U_{ID}}$), admet comme seconde variable l'identifiant ($O_{ID}$) de l'opérateur; et
ladite fonction mathématique d'operateur ($g_2$), utilisée par l'operateur (Op) pour calculer ladite clé d'appariement ($K_{O_{ID}-U_{ID}}$), admet comme seconde variable l'identifiant de unité multimédia ($U_{ID}$).

5. Entité de personnalisation en charge d'apparier au moins un opérateur (Op) et au moins une unité multimédia (STB), **caractérisée en ce que** cette entité de personnalisation dispose:

- d'une clé de personnalisation (N),
- d'un identifiant ($U_{ID}$) de ladite unité multimédia (STB) à apparier,
- d'un identifiant ($O_{ID}$) dudit opérateur à apparier,
- d'une première fonction ($f_1$) cryptographiquement sûre utilisée pour calculer une clé d'unité multimédia ($KU_{ID}$),
- d'une deuxième fonction ($g_1$) cryptographiquement sûre utilisée pour calculer une clé d'opérateur ($KO_{ID}$), et
- de moyens de calcul agencés pour calculer ladite clé d'unité multimédia ($KU_{ID}$) et ladite clé d'opérateur ($KO_{ID}$),

chacune desdites fonctions ($f_1$, $g_1$) étant une fonction d'exponentiation modulaire d'expression:

$$f(a,b) = a^{H(b)} \bmod m$$

où a et b sont les paramètres de la fonction, H est une fonction cryptographique de hachage et m est le produit de deux grands nombres premiers p et q;
ladite première fonction ($f_1$), utilisée pour calculer la clé d'unité multimédia ($KU_{ID}$), admet comme première et seconde variables respectivement ladite clé de personnalisation (N) et l'identifiant ($U_{ID}$) de l'unité multimédia; et
ladite deuxième fonction ($g_1$), utilisée pour calculer la clé d'opérateur ($KO_{ID}$), admet comme première et seconde variables respectivement ladite clé de personnalisation (N) et l'identifiant ($O_{ID}$) de l'opérateur (Op).

**Patentansprüche**

1. Verknüpfungsverfahren zwischen einer Multimediaeinheit (STB) und mindestens einem Bediener (Op), wobei die Multimediaeinheit (STB) dazu gedacht ist, Daten mit bedingtem Zugriff von dem Bediener (Op) zu empfangen, wobei die Multimediaeinheit über eine Multimediaeinheitskennung ($U_{ID}$) verfügt, wobei der Bediener über eine Bedienerkennung ($O_{ID}$) verfügt, wobei das Verfahren folgende Schritte umfasst:

   - die Multimediaeinheit empfängt einen Multimediaeinheitsschlüssel ($KU_{ID}$), der aus einer ersten kryptographisch sicheren Funktion ($f_1$) stammt;
   - der Bediener empfängt einen Bedienerschlüssel ($KO_{ID}$), der aus einer zweiten kryptographisch sicheren Funktion ($g_1$) stammt;
   wobei die Multimediaeinheit ferner über eine mathematische Funktion ($f_2$) der Multimediaeinheit verfügt und der Bediener ferner über eine mathematische Funktion ($g_2$) des Bedieners verfügt, wobei diese mathematischen Funktionen ($f_2$, $g_2$) ein Produkt m von zwei großen Primzahlen p und q verwenden;
   - der Bediener (Op) generiert einen Verknüpfungsschlüssel ($K_{O_{ID}-U_{ID}}$) zwischen der Multimediaeinheit (STB) und dem Bediener (Op), indem er den Bedienerschlüssel ($KO_{ID}$) als erste Variable der mathematischen Funktion ($g_2$) des Bedieners verwendet;
   - die Multimediaeinheit (STB) generiert den gleichen Verknüpfungsschlüssel ($K_{O_{ID}-U_{ID}}$), indem sie den Multimediaeinheitsschlüssel ($KU_{ID}$) als erste Variable der mathematischen Funktion der Multimediaeinheit ($f_2$) verwendet;

   wobei das Verfahren **dadurch gekennzeichnet ist, dass**:

   der Multimediaeinheitsschlüssel ($KU_{ID}$) und der Bedienerschlüssel ($KO_{ID}$) durch eine Anpassungsentität (P) bestimmt und zur Verfügung gestellt werden;
   wobei jede der Funktionen ($f_1$, $g_1$, $f_2$, $g_2$) eine folgendermaßen ausgedrückte diskrete Exponentialfunktion ist:

   $$f(a,b) = a^{H(b)} \bmod m$$

   wobei a und b die ersten und zweiten Variablen der Funktion sind, H eine kryptographische Hash-Funktion ist, und m das Produkt der beiden großen Primzahlen p und q ist;
   die erste Funktion ($f_1$), die verwendet wird, um den Multimediaeinheitsschlüssel ($KU_{ID}$) zu berechnen, als erste und zweite Variablen jeweils einen geheimen Anpassungsschlüssel (N), welcher der Anpassungseinheit (P) eigen ist, und die Kennung ($U_{ID}$) der Multimediaeinheit (STB) zulässt;
   die zweite Funktion ($g_1$), die verwendet wird, um den Bedienerschlüssel ($KO_{ID}$) zu berechnen, als erste und zweite Variablen jeweils den Anpassungsschlüssel (N) und die Kennung ($O_{ID}$) des Bedieners (Op) zulässt;
   die mathematische Funktion ($f_2$) der Multimediaeinheit, die von der Multimediaeinheit (STB) verwendet wird, um den Verknüpfungsschlüssel ($K_{O_{ID}-U_{ID}}$) zu berechnen, als zweite Variable die Kennung ($O_{ID}$) des Bedieners zulässt; und
   die mathematische Funktion ($g_2$) des Bedieners, die von dem Bediener (Op) verwendet wird, um den Verknüpfungsschlüssel ($K_{O_{ID}-U_{ID}}$) zu berechnen, als zweite Variable die Kennung der Multimediaeinheit ($U_{ID}$) zulässt.

2. Multimediaeinheit (STB), die dazu gedacht ist, mit mindestens einem Bediener (Op) verknüpft zu sein, wobei diese Multimediaeinheit (STB) verfügt über:

   - eine Multimediaeinheitskennung ($U_{ID}$),
   - einen Multimediaeinheitsschlüssel ($KU_{ID}$), der aus einer ersten kryptographisch sicheren Funktion ($f_1$) stammt,
   - eine mathematische Funktion ($f_2$) der Multimediaeinheit, die ein Produkt m von zwei großen Primzahlen p und q verwendet, und
   - Rechenmittel, um einen Verknüpfungsschlüssel ($K_{O_{ID}-U_{ID}}$) zwischen der Multimediaeinheit (STB) und dem Bediener (Op) unter Verwendung des Multimediaeinheitsschlüssels ($KU_{ID}$) als erste Variable der mathematischen Funktion ($f_2$) der Multimediaeinheit zu generieren,

   **dadurch gekennzeichnet, dass**:

   der Multimediaeinheitsschlüssel ($KU_{ID}$) durch eine Anpassungsentität (P) bestimmt und zur Verfügung gestellt wird;

wobei jede der Funktionen ($f_1$, $f_2$) eine folgendermaßen ausgedrückte diskrete Exponentialfunktion ist:

$$f(a,b) = a^{H(b)} \bmod m$$

wobei a und b die ersten und zweiten Variablen der Funktion sind, H eine kryptographische Hash-Funktion ist, und m das Produkt der beiden großen Primzahlen p und q ist;

die erste Funktion ($f_1$), die verwendet wird, um den Multimediaeinheitsschlüssel ($KU_{ID}$) zu berechnen, als erste und zweite Variablen jeweils einen geheimen Anpassungsschlüssel (N), welcher der Anpassungseinheit (P) eigen ist, und die Kennung ($U_{ID}$) der Multimediaeinheit (STB) zulässt;

die mathematische Funktion ($f_2$) der Multimediaeinheit, die durch die Rechenmittel der Multimediaeinheit (STB) verwendet wird, um den Verknüpfungsschlüssel ($K_{O_{ID}-U_{ID}}$) zu berechnen, als zweite Variable die Kennung ($O_{ID}$) des Bedieners (Op) zulässt.

3. Bediener (Op), der dazu gedacht ist, mit mindestens einer Multimediaeinheit (STB) verknüpft zu werden, wobei dieser Bediener (Op) verfügt über:

- eine Bedienerkennung ($O_{ID}$),
- einen Bedienerschlüssel ($KO_{ID}$), der aus einer zweiten kryptographisch sicheren Funktion ($g_1$) stammt,
- eine mathematische Funktion ($g_2$) des Bedieners, die ein Produkt m von zwei großen Primzahlen p und q verwendet, und
- Rechenmittel zum Generieren eines Verknüpfungsschlüssels ($K_{O_{ID}-U_{ID}}$) zwischen der Multimediaeinheit (STB) und dem Bediener (Op) unter Verwendung des Bedienerschlüssels ($KO_{ID}$) als erste Variable der mathematischen Funktion ($g_2$) des Bedieners,

**dadurch gekennzeichnet, dass**:

der Bedienerschlüssel ($KO_{ID}$) durch eine Anpassungseinheit (P) bestimmt und zur Verfügung gestellt wird;

jede der Funktionen ($g_1$, $g_2$) eine folgendermaßen ausgedrückte diskrete Exponentialfunktion ist:

$$g(a,b) = a^{H(b)} \bmod m$$

wobei a und b die ersten und zweiten Variablen der Funktion sind, H eine kryptographische Hash-Funktion ist, und m das Produkt der beiden großen Primzahlen p und q ist;

die zweite Funktion ($g_1$), die verwendet wird, um den Bedienerschlüssel ($KO_{ID}$) zu berechnen, als erste und zweite Variablen jeweils einen geheimen Anpassungsschlüssel (N), welcher der Anpassungsentität (P) eigen ist, und die Kennung ($O_{ID}$) des Bedieners (Op) zulässt; und

die mathematische Funktion ($g_2$) des Bedieners, die durch die Rechenmittel des Bedieners (Op) verwendet wird, um den Verknüpfungsschlüssel ($K_{O_{ID}-U_{ID}}$) zu berechnen, als zweite Variable die Kennung ($U_{ID}$) der Multimediaeinheit (STB) zulässt.

4. System zum Zugreifen auf Daten mit bedingtem Zugriff, die an mindestens eine Multimediaeinheit (STB) durch mindestens einen Bediener (Op) übertragen werden, mit dem die Multimediaeinheit verknüpft werden soll, wobei die Multimediaeinheit (STB) verfügt über:

- eine Multimediaeinheitskennung ($U_{ID}$),
- einen Multimediaeinheitsschlüssel ($KU_{ID}$), der aus einer ersten kryptographisch sicheren Funktion ($f_1$) stammt,
- eine mathematische Funktion ($f_2$) der Multimediaeinheit, die ein Produkt m von zwei großen Primzahlen p und q verwendet, und
- Rechenmittel, um einen Verknüpfungsschlüssel ($K_{O_{ID}-U_{ID}}$) zwischen der Multimediaeinheit (STB) und dem Bediener (Op) unter Verwendung des Multimediaeinheitsschlüssels ($KU_{ID}$) als erste Variable der mathematischen Funktion der Multimediaeinheit ($f_2$) zu generieren;

wobei der Bediener (Op) verfügt über:

- eine Bedienerkennung ($O_{ID}$),
- einen Bedienerschlüssel ($KO_{ID}$), der aus einer zweiten kryptographisch sicheren Funktion ($g_1$) stammt,
- eine mathematische Funktion ($g_2$) des Bedieners unter Verwendung des Produkts m der beiden großen Primzahlen p und q, und
- Rechenmittel zum Generieren des gleichen Verknüpfungsschlüssels ($K_{O_{ID}-U_{ID}}$) unter Verwendung des Bedienerschlüssels ($KO_{ID}$) als erste Variable der mathematischen Funktion ($g_2$) des Bedieners,

**dadurch gekennzeichnet, dass**:

der Multimediaeinheitsschlüssel ($KU_{ID}$) und der Bedienerschlüssel ($KO_{ID}$) durch eine Anpassungseinheit (P) bestimmt und zur Verfügung gestellt werden;
jede der Funktionen ($f_1$, $g_1$, $f_2$, $g_2$) eine folgendermaßen ausgedrückte diskrete Exponentialfunktion ist:

$$f(a, b) = a^{H(b)} \bmod m$$

wobei a und b die ersten und zweiten Variablen der Funktion sind, H eine kryptographische Hash-Funktion ist, und m das Produkt der beiden großen Primzahlen p und q ist;
die erste Funktion ($f_1$), die verwendet wird, um den Multimediaeinheitsschlüssel ($KU_{ID}$) zu berechnen, als erste und zweite Variablen jeweils einen geheimen Anpassungsschlüssel (N), welcher der Anpassungsentität (P) eigen ist, und die Kennung ($U_{ID}$) der Multimediaeinheit (STB) zulässt;
die zweite Funktion ($g_1$), die verwendet wird, um den Bedienerschlüssel ($KO_{ID}$) zu berechnen, als erste und zweite Variablen jeweils den Anpassungsschlüssel (N) und die Kennung ($O_{ID}$) des Bedieners (Op) zulässt;
die mathematische Funktion ($f_2$) der Multimediaeinheit, die durch die Multimediaeinheit (STB) verwendet wird, um den Verknüpfungsschlüssel ($K_{O_{ID}-U_{ID}}$) zu berechnen, als zweite Variable die Kennung ($O_{ID}$) des Bedieners zulässt; und
die mathematische Funktion ($g_2$) des Bedieners, die durch den Bediener (Op) verwendet wird, um den Verknüpfungsschlüssel ($K_{O_{ID}-U_{ID}}$) zu berechnen, als zweite Variable die Kennung der Multimediaeinheit ($U_{ID}$) zulässt.

5. Anpassungsentität zum Verknüpfen mindestens eines Bedieners (Op) und mindestens einer Multimediaeinheit (STB), **dadurch gekennzeichnet, dass** diese Anpassungsentität verfügt über:

- einen Anpassungsschlüssel (N),
- eine Kennung ($U_{ID}$) der zu verknüpfenden Multimediaeinheit (STB),
- eine Kennung ($O_{ID}$) des zu verknüpfenden Bedieners,
- eine erste kryptographisch sichere Funktion ($f_1$), die verwendet wird, um einen Multimediaeinheitsschlüssel ($KU_{ID}$) zu berechnen,
- eine zweite kryptographisch sichere Funktion ($g_1$), die verwendet wird, um einen Bedienerschlüssel ($KO_{ID}$) zu berechnen, und
- Rechenmittel, die eingerichtet sind, um den Multimediaeinheitsschlüssel ($KU_{ID}$) und den Bedienerschlüssel ($KO_{ID}$) zu berechnen,

wobei jede der Funktionen ($f_1$, $g_1$) eine folgendermaßen ausgedrückte diskrete Exponentialfunktion ist:

$$f(a,b) = a^{H(b)} \bmod m$$

wobei a und b die Parameter der Funktion sind, H eine kryptographische Hash-Funktion ist, und m das Produkt der beiden großen Primzahlen p und q ist;
die erste Funktion ($f_1$), die verwendet wird, um den Multimediaeinheitsschlüssel ($KU_{ID}$) zu berechnen, als erste und zweite Variablen jeweils den Anpassungsschlüssel (N) und die Kennung ($U_{ID}$) der Multimediaeinheit zulässt; und
die zweite Funktion ($g_1$), die verwendet wird, um den Bedienerschlüssel ($KO_{ID}$) zu berechnen, als erste und zweite Variablen jeweils den Anpassungsschlüssel (N) und die Kennung ($O_{ID}$) des Bedieners (Op) zulässt.

**Claims**

1. A pairing method between a multimedia unit (STB) and at least one operator (Op), the multimedia unit (STB) being intended to receive conditional access data from said operator (Op), the multimedia unit having a multimedia unit identifier ($U_{ID}$), the operator having an operator identifier ($O_{ID}$), the method comprising the following steps:

   - the multimedia unit receives a multimedia unit key ($KU_{ID}$) derived from a first cryptographically safe function ($f_1$);
   - the operator receives an operator key ($KO_{ID}$) derived from a second cryptographically safe function ($g_1$);
   said multimedia unit further having a multimedia unit mathematical function ($f_2$) and said operator further having an operator mathematical function ($g_2$), these mathematical functions ($f_2$, $g_2$) using a product m of two large prime numbers p and q;
   - the operator (Op) generates a pairing key ($K_{O_{ID}\text{-}U_{ID}}$), between said multimedia unit (STB) and said operator (Op), using the operator key ($KO_{ID}$) as first variable of the operator mathematical function ($g_2$);
   - the multimedia unit (STB) generates the same pairing key ($K_{O_{ID}\text{-}O_{ID}}$) using said multimedia unit key ($KU_{ID}$) as first variable of the multimedia unit mathematical function ($f_2$);

   the method being **characterized in that**:

   said multimedia unit key ($KU_{ID}$) and said operator key ($KO_{ID}$) are determined and made available by a customization entity (P);
   each of said functions ($f_1$, $g_1$, $f_2$, $g_2$) being a molecular exponentiation function expressed by:

   $$f(a,b) = a^{H(b)} \bmod m$$

   where a and b are the first and second variables of the function, H is a cryptographic hash function and m is said product of the two large prime numbers p and q;
   said first function ($f_1$), used to calculate the multimedia unit key ($KU_{ID}$), allows, as first and second variables, respectively, a secret customization key (N) specific to the customization entity (P) and the identifier ($U_{ID}$) of the multimedia unit (STB);
   said second function ($g_1$), used to calculate the operator key ($KO_{ID}$), allows, as first and second variables, respectively, said customization key (N) and the identifier ($O_{ID}$) of the operator (Op);
   said multimedia unit mathematical function ($f_2$), used by the multimedia unit (STB) to calculate said pairing key ($K_{O_{ID}\text{-}U_{ID}}$), allows, as second variable, the identifier ($O_{ID}$) of the operator; and
   said operator mathematical function ($g_2$), used by the operator (Op) to calculate said pairing key ($K_{O_{ID}\text{-}U_{ID}}$), allows, as second variable, the multimedia unit identifier ($U_{ID}$).

2. A multimedia unit (STB) intended to be paired with at least one operator (Op), said multimedia unit (STB) having:

   - a multimedia unit identifier ($U_{ID}$),
   - a multimedia unit key ($KU_{ID}$) derived from a first cryptographically safe function ($f_1$),
   - a multimedia unit mathematical function ($f_2$) using a product m of two large prime numbers p and q, and
   - calculating means to generate a pairing key ($K_{O_{ID}\text{-}U_{ID}}$) between said multimedia unit (STB) and the operator (Op) by using said multimedia unit key ($KU_{ID}$) as first variable of the multimedia unit mathematical function ($f_2$),

   **characterized in that**:

   said multimedia unit key ($KU_{ID}$) is determined and made available by a customization entity (P);
   each of said functions ($f_1$, $f_2$) being a modular exponentiation function expressed by:

   $$f(a,b) = a^{H(b)} \bmod m$$

   where a and b are the first and second variables of the function, H is a cryptographic hash function and m is said product of the two large prime numbers p and q;
   said first function ($f_1$), used to calculate the multimedia unit key ($KU_{ID}$), allows, as first and second variables, respectively, a secret customization key (N) specific to the customization entity (P) and the identifier ($U_{ID}$) of the multimedia unit (STB); and

said multimedia unit mathematical function ($f_2$), used by the multimedia unit calculating means (STB) to calculate said pairing key ($K_{O_{ID}-U_{ID}}$), allows, as second variable, the identifier ($O_{ID}$) of the operator (Op).

3. An operator (Op) intended to be paired with at least one multimedia unit (STB), said operator (Op) having:

- an operator identifier ($O_{ID}$),
- an operator key ($KO_{ID}$) derived from a second cryptographically safe function ($g_1$),
- an operator mathematical function ($g_2$) using a product m of two large prime numbers p and q, and
- calculating means to generate a pairing key ($K_{O_{ID}-U_{ID}}$) between said multimedia unit (STB) and the operator (Op) using said operator key ($KO_{ID}$) as first variable of the operator mathematical function ($g_2$),

**characterized in that**:

said operator key ($KO_{ID}$) is determined and made available by a customization entity (P);
each of said functions ($g_1$, $g_2$) being a modular exponentiation function expressed by:

$$g(a,b) = a^{H(b)} \bmod m$$

where a and b are the first and second variables of the function, H is a cryptographic hash function and m is said product of the two large prime numbers p and q;
said second function ($g_1$), used to calculate the operator key ($KO_{ID}$), allows, as first and second variables, respectively, a secret customization key (N) specific to the customization entity (P) and the identifier ($O_{ID}$) of the operator (Op); and
said operator mathematical function ($g_2$), used by the calculating means of the operator (Op) to calculate said pairing key ($K_{O_{ID}-U_{ID}}$), allows, as second variable, the identifier ($U_{ID}$) of the multimedia unit (STB).

4. An access system for conditional data sent to at least one multimedia unit (STB) by at least one operator (Op) with which said multimedia unit is to be paired,
the multimedia unit (STB) having:

- a multimedia unit identifier ($U_{ID}$),
- a multimedia unit key ($KU_{ID}$) derived from a first cryptographically safe function ($f_1$),
- a multimedia unit mathematical function ($f_2$) using a product m of two large prime numbers p and q, and
- calculating means to generate a pairing key ($K_{O_{ID}-U_{ID}}$) between said multimedia unit (STB) and said operator (Op) by using said multimedia unit key ($KU_{ID}$) as first variable of the multimedia unit mathematical function ($f_2$);

the operator (Op) having:

- an operator identifier ($O_{ID}$),
- an operator key ($KO_{ID}$) derived from a second cryptographically safe function ($g_1$),
- an operator mathematical function ($g_2$) using said product m of the two large prime numbers p and q, and
- calculating means to generate the same pairing key ($K_{O_{ID}-U_{ID}}$) by using said operator key ($KO_{ID}$) as variable of the operator mathematical function ($g_2$),

**characterized in that**:

said multimedia unit key ($KU_{ID}$) and said operator key ($KO_{ID}$) are determined and made available by a customization entity (P);
each of said functions ($f_1$, $g_1$, $f_2$, $g_2$) being a modular exponentiation function expressed by:

$$f(a,b) = a^{H(b)} \bmod m$$

where a and b are the first and second variables of the function, H is a cryptographic hash function and m is said product of the two large prime numbers p and q;

said first function ($f_1$), used to calculate the multimedia unit key ($KU_{ID}$), allows, as first and second variables, respectively, a secret customization key (N) specific to the customization entity (P) and the identifier ($U_{ID}$) of the multimedia unit (STB);

said second function ($g_1$), used to calculate the operator key ($KO_{ID}$), allows, as first and second variables, respectively, said customization key (N) and the identifier ($O_{ID}$) of the operator (Op);

said multimedia unit mathematical function ($f_2$), used by the multimedia unit (STB) to calculate said pairing key ($K_{O_{ID}-U_{ID}}$), allows, as second variable, the identifier ($O_{ID}$) of the operator; and

said operator mathematical function ($g_2$), used by the operator (Op) to calculate said pairing key ($K_{O_{ID}-U_{ID}}$), allows, as second variable, the multimedia unit identifier ($U_{ID}$).

5. A customization entity responsible for pairing at least one operator (Op) and at least one multimedia unit (STB), **characterized in that** said customization entity has:

- a customization key (N),
- an identifier ($U_{ID}$) of said multimedia unit (STB) to be paired,
- an identifier ($O_{ID}$) of said operator to be paired,
- a first cryptographically safe function ($f_1$) used to calculate a multimedia unit key ($KU_{ID}$),
- a second cryptographically safe function ($g_1$) used to calculate and operator key ($KO_{ID}$), and
- calculating means arranged to calculate said multimedia unit key ($KU_{ID}$) and said operator key ($KO_{ID}$),

each of said functions ($f_1$, $g_1$) being a modular exponentiation function expressed by:

$$f(a,b) = a^{H(b)} \bmod m$$

where a and b are the parameters of the function, H is a cryptographic hash function and m is the product of two large prime numbers p and q;

said first function ($f_1$), used to calculate the multimedia unit key ($KU_{ID}$), allows, as first and second variables, respectively, said customization key (N) and the identifier ($U_{ID}$) of the multimedia unit; and

said second function ($g_1$), used to calculate the operator key ($KO_{ID}$), allows, as first and second variables, respectively, said customization key (N) and the identifier ($O_{ID}$) of the operator (Op).

Fig. 1

$$KO_1 = g_1(N; O_1)$$

$U_1$ $\otimes$

$$K_{O_1-U_1} = g_2(KO_1; U_1)$$
$$= g_2(g_1(N; O_1); U_1)$$

$\otimes$ ← KT     CT

$\otimes$ ← [CW] → $\otimes$

$[KT]_{K_{O1-U1}}$     $[CW]_{KT}$     $[CT]_{CW}$

## Fig. 2

$$KU_1 = f_1(N; U_1)$$

$O_1$ $\otimes$

$$K_{O_1-U_1} = f_2(KU_1; O_1)$$
$$= f_2(f_1(N; U_1); O_1)$$

→ $[KT]_{K_{O1-U1}}$ → $\otimes$

KT

→ $[CW]_{KT}$ → $\otimes$

[CW]

→ $[CT]_{CW}$ → $\otimes$

CT

## Fig. 3